# EUROPEAN PATENT SPECIFICATION

(11) **EP 4 477 063 B1**
(45) Date of publication and mention of the grant of the patent: **22.04.2026**
(21) Application number: 23179565.9
(22) Date of filing: 15.06.2023
(51) Int. Cl.: A01G 9/02, A01G 9/029, B65D 5/22, B65D 85/52

(54) **FOLDABLE PLANT CONTAINER AND METHOD OF FOLDING SAID PLANT CONTAINER**
FALTBARER PFLANZENBEHÄLTER UND VERFAHREN ZUM FALTEN DES PFLANZENBEHÄLTERS
RÉCIPIENT À PLANTES PLIABLE ET PROCÉDÉ DE PLIAGE DUDIT RÉCIPIENT À PLANTES

(43) Date of publication of application: 18.12.2024
(73) Proprietor: Papemballagen ApS, 9500 Hobro (DK)
(72) Inventor: Ranch, Anne, 9500 Hobro (DK)
(74) Representative: Patrade A/S

(56) References cited:
- ES-U- 1 053 925
- JP-U- S5 064 556
- KR-Y1- 200 334 040
- NO-B1- 346 667

## Description

### Field of the Invention

The present invention relates to a biodegradable foldable plant container. The foldable container comprises a plurality of first side walls, each comprising two side flanges, and second side walls, each comprising a top flange. The side walls comprise at least one side folding crease positioned between a side wall and a side flange on the first side wall, and/or between a side wall and a top flange on the second side wall. The foldable container further comprises a bottom defined by a plurality of bottom folding creases, positioned between a side wall and the bottom.

The container can take an unfolded position for transportation and/or storage and a folded position defining a container configured for receiving a plant growth medium.

In the folded position:
- at least one side folding crease is folded, preferably six side folding creases are folded;
- at least one bottom folding crease is folded, preferably four bottom folding creases are folded; and
- a second side wall and the top flange of said second side wall enclose at least partially two side flanges, wherein said two side flanges are from two opposing first side walls.

### Background of the Invention

Today, cultivated plants are often sold in nursery pots made of plastic. The nursery pots serve the purpose of stabilising the plant in soil until the plant is ready to be replanted in a bigger pot or planted out into soil. As most plant pots are not biodegradable, the pots must be removed before the plant is planted out into soil which accumulates a lot of waste materials for both consumers, gardeners, landscapers, and within horticulture in general.

When working on larger landscaping projects, these plastic pots will often be planted directly in the soil to save time, thus releasing microplastics into the environment.

Even if the nursery pots are removed, they have to be cleaned before being recycled because of the contamination from the soil. However, this process requires additional resources and water use.

Biodegradable pots today are either just for sales purposes as they are not stabile enough for the nursing stages where the seedlings and plants are periodically flooded and subsequently left to dry. Other biodegradable pots are made of moulded biodegradable material, a production process that requires both water, moulds, and heat to cure resulting in an expensive end product. Furthermore, these pots take up a space both during transportation and storage.

One example of a biodegradable pot is found in NO346667B1, disclosing a recyclable flower box. To fold the flower box, wall connect members are fastened to neighboring side wall base portions and every other top portion is folded inward to provide a recess for a lip to engage to achieve the desired visual appearance.

Hence, an improved biodegradable nursery pot for use from planting a seed or seedling to regularly irrigating the during the nursery stages and to planting the nursery pot in soil is advantageous.

### Object of the Invention

One objective of the present disclosure is to achieve an alternative to the prior art.

In particular, it may be seen as an object of the present invention to provide a waste reducing foldable plant container for receiving, growing, and planting out a plant growth medium.

### Description of the Invention

Thus, the above-described object and several other objects are intended to be obtained in a first object of the invention by providing a foldable plant container as defined in claim 1.

The invention is particularly, but not exclusively, advantageous for providing a waste reducing foldable plant container for receiving, growing, and planting out a plant growth medium.

The term 'plant growth medium' is used to describe one or more seeds, seedling, or plant, planted in any type of soil or soil mixture. Furthermore, plant may be used to describe a plant descending from a single seed or a plant unit comprising of a plurality of plants forming one unit.

The container being foldable provides a position for transport and storage, and a position for receiving, growing, and planting out a plant growth medium. The two positions provide several advantages.

The foldable container in the unfolded position is suitable for transportation and/or storage as a significant amount of foldable containers can be stacked on top of one another.

In the unfolded position, the foldable container is configured in a single layer of water permeable biodegradable material. The container in 'a single layer' should be understood as the unfolded container having no overlapping between side walls and/or bottom. Single layer is not descriptive of the construction of the water-permeable biodegradable material which may comprise more than one layer of material.

The single layer may be substantially a plane layer wherein the side walls and the bottom are substantially parallel to a transporting surface or a storage surface.

Stacking unfolded containers saves space both during transportation and storing as the space between each unfolded container is minimized. During transportation and storage, several stacks of unfolded containers may be arranged side by side.

The foldable container in the folded position is suitable for receiving a plant growth medium and supporting the plant growth medium until it is ready to be planted directly into the soil in the container that will degrade over time.

When the container is in the folded position, it is folded such that a top flange of a second side wall encloses at least partially two side flanges from two opposing first side walls. In the folded position, the foldable container is configured in several layers where one or more side walls at least partially overlap one or more neighboring side walls.

It should be understood that the foldable container of the invention may be able to take other positions than the fully unfolded position and the fully folded position. As illustrated in the figures, there are many potential positions between the fully unfolded and fully folded position.

The side folding creases may be folding aids such as indentations, creases, and/or perforated lines suitable for specifying where to fold and assisting of folding the side flanges and top flanges. The side folding creases ensure uniform folding of the side flanges relative to the second side wall and/or folding the top flange relative to the second side wall. The side folding creases may be arranged on one side of the plane layer.

The bottom folding creases may be folding aids such as indentations, creases, and/or perforated lines suitable for specifying where to fold and assisting of folding the first and second side walls relative to the bottom. The bottom folding creases ensure uniform folding of the first and second side walls. The bottom folding creases may be arranged on the same side of the plane layer as the side folding creases.

The side folding crease and bottom folding crease ensure a uniform folding of the container. The side and bottom folding creases further ensure that each folded container is stable, and all containers substantially have the same dimensions.

The bottom may be square to better utilize space when folded containers are arranged next to one another.

The foldable container may be cut and creased by a machine such as a punching machine or a cutting machine. The punching machine or cutting machine may cut or punch out several foldable containers from a sheet of biodegradable material.

In one embodiment of the invention, the foldable container may comprise two substantially identical first side walls and two substantially identical second side walls. It should be understood that folding the four side walls may comprise of two steps, each being repeated.

In one embodiment of the invention, the foldable plant container may be a foldable transport container configured for receiving a number of foldable plant containers.

The foldable transport container is particularly, but not exclusively, advantageous for providing means for transporting a number of foldable plant containers. The foldable transport container may further be suitable for displaying a number of foldable plant containers in a store enabling a customer of said store to remove one or more of the foldable plant containers from the foldable transport container and/or one or more foldable transport containers comprising foldable plant containers.

The locking means for interlocking the side walls in the folded position are such that the container remains in the folded position when receiving the plant growth medium and during growing and subsequently planting out the plant growth medium.

When in the folded position, the container is folded such that a when the top flange of a second side wall encloses at least partially two side flanges, from two opposing first side walls, the one or more protrusions on each top flange are configured for being engaged by the one or complementary shaped apertures on at least one first side wall.

When in the folded position, the container is folded such that when the top flange of a second side wall encloses at least partially two side flanges, from two opposing first side walls, the one or more protrusions on each side flange are configured for being engaged by the one or complementary shaped apertures on at least one second side wall.

The protrusions arranged on the side flanges may have a different size and/or shape than the protrusions arranged on the top flanges. Similarly, the size of the apertures complementary shaped to the protrusions on the side flanges may have a different size and/or shape than the apertures complementary shaped to the protrusions on the top flanges.

In one embodiment of the invention, each side flange may comprise a partial protrusion configured for forming a protrusion with the opposing side flange when the foldable container is in the folded position.

The embodiment is particularly, but not exclusively, advantageous for using a single aperture for locking two partial protrusions thus limiting the number of apertures while securing two opposing first side walls in a position relative to one another and relative to the second side wall enclosing said first side walls.

It should be understood that locking the two partial protrusions increase the stability of the folded container by preventing the two opposing first side walls from accidently unfolding.

It should further be understood that locking the two partial protrusions minimizes the amount of apertures required for folding and interlocking the side walls of the container.

In one embodiment of the invention, the side flange comprises an indentation.

The embodiment is particularly, but not exclusively, advantageous for providing a positive ease to ensure that the top flange can be folded over the two side flanges from opposing first side walls.

It should be understood that the indentation increases the tolerance ensuring that the top flange easily can be folded over the two side flanges while maintaining stability in the folded container.

In one embodiment of the invention, the surface area of the bottom may be smaller than the area of an upper opening defined by the side walls when the foldable container is in the folded position.

The embodiment is particularly, but not exclusively, advantageous for providing a foldable container suitable for being stacked when in the folded position.

The location where the containers are folded may be different from the location where the containers receive a plant growth medium. The stacked containers in the folded position are suitable for transportation between locations and/or for space optimized storing of folded containers.

It should be understood that the conical shape increases the stability of the stacked containers when being transported or stored.

It should moreover be understood that the conical shape creates air passages in the negative space between the side walls of neighboring folded containers when arranged next to one another. Enabling air to flow between the side walls of neighboring containers means the containers dry faster between irrigations thus allowing the folded container to maintain structural integrity for longer until being planted in soil.

The upper opening may be defined by the free edge of the first side walls and edge defined by the one or more side creases of the second side wall.

The ratio between the upper edges of first and second side walls, defining the area of the upper opening, may be substantially the same as the ratio between the sides of the bottom.

Preferably, though not necessary, both the bottom and the upper opening may be substantially square.

It should be understood that a square bottom and upper opening enable stacking without having to orient first side walls or second side walls in the same direction.

In one embodiment of the invention, the bottom may comprise draining means. The draining means may preferably be cut outs.

The embodiment is particularly, but not exclusively, advantageous for increasing water permeability and drainage during irrigation where at least part of the foldable container is periodically submerged in water and/or is irrigated using a water pouring system.

The draining means may ensure that the plant growth medium inside the folded container is able to effectively absorb water when submerged.

The draining means may further ensure that excess water from the plant growth medium in the folded container can effectively drain when no longer submerged and/or poured with water. Effectively draining excess water further decreases the drying time of the folded container which counteracts over-watering and prolongs the life of the container.

It should be understood that the container may degrade before the plant growth medium is ready to be planted in soil without sufficient draining.

It should moreover be understood that sufficient draining is necessary for the plant or seedling in the plant growth medium to thrive and grow, thereby minimizing the risk of over-watering.

The folded container comprising a plant growth medium may be able to withstand being at least partly submerged in water between 10-40 minutes, up to three times a day, over a period of 3-9 months.

In one embodiment of the invention, the second side walls may comprise two substantially parallel side folding creases.

The embodiment is particularly, but not exclusively, advantageous for providing an intermediate folding wall for engaging the top edge of the two side flanges when folding over two side flanges from two opposing first side walls. The parallel side folding creases may ensure that the two second side walls are substantially the same height when in the folded position.

The two substantially parallel side folding creases on each second side wall may comprise different bend radii to ensure an optimal fold to enclose at least partially the side flanges. One of the creases may be a high crease.

In one embodiment of the invention, the second side walls may comprise a wide side folding crease.

The embodiment is particularly, but not exclusively, advantageous for providing a wide side folding crease for engaging the top edge of the two side flanges when folding over two side flanges from two opposing first side walls. The wide side folding creases may ensure that the two second side walls are substantially the same height when in the folded position.

In one embodiment of the invention, the biodegradable material may be a corrugated cardboard.

The embodiment is particularly, but not exclusively, advantageous for providing structural stability in the container in the folded position. In the folded position, the container is configured for withstanding forces from packing a plant growth medium in the planting space. The folded container is further configured for withholding the shape during irrigating, periodically submerging at least part of the folded container in water and for being biodegradable when planted in the soil.

It should be understood that the corrugations in the cardboard may provide air passages between the layers that constitute the corrugated cardboard material. Said air passages may decrease the drying time of the folded container which counteracts over-watering and prolongs the life of the container.

In one embodiment of the invention, the corrugated cardboard may comprise cellulose from wood or grass or a combination of wood and grass fibers. Production of cardboard and paper using wood-based fibers is both energy and water intensive.

It should be understood that production of cardboard and paper using grass-based fibers requires less energy, grows fast, and can be harvested multiple times. Preferably, though not necessarily, the cellulose may comprise between 10 and 60% grass-based cellulose.

In one embodiment of the invention, the biodegradable material may be a corrugated board comprising between 80-99%, preferably 85-99%, more preferably 90-99%, even more preferably 95-99%, most preferably 89-99% recycled corrugated cardboard, and/or paper, and/or cardboard.

The embodiment is particularly, but not exclusively, advantageous for providing a foldable container in a biodegradable recycled material.

In one embodiment of the invention, the recycled corrugated cardboard may comprise cellulose from wood or grass or a combination of wood and grass fibers.

It should be understood that production of cardboard and paper using recycled grass-based fibers or wood-based fibers requires less energy.

In one embodiment of the invention, the side walls and bottom, when in the folded position, may withstand an applied pressure in a direction:
- downwards towards the bottom; and
- outwards towards the side walls;
wherein the applied pressure may be between 0.1-1 bar, 0.1-0.3 bar, 0.2-0.4 bar, 0.2-0.5 bar, 0.3-0.9 bar, or 0.4-1 bar.

The embodiment is particularly, but not exclusively, advantageous for providing structural stability in the container in the folded position. In the folded position, the container is configured for withstanding forces from packing soil forming part of the plant growth medium in the planting space, withhold the shape during irrigating, periodically submerging at least part of the folded container comprising plant growth medium, and being biodegradable when planted in the soil.

The container may withstand forces applied from the inside of the container when soil, forming part of the plant growth medium, is packed in the planting space.

The container may further withstand forces applied from the outside of the container when the container is planted in soil and when lifting and/or transporting the folded containers.

The pressure may be applied by a potting machine. The pressure may depend on the type of soil used for the plant growth medium.

After the soil has been packed in the foldable container, a small drill or spear may create a small hole for receiving one or more plants, seed, or seedling.

In a second aspect, the invention further relates to a method for folding the plant container, from an unfolded position to a folded position, according to claim 11.

The second aspect of the invention is particularly, but not exclusively, advantageous for providing a method for easy folding a plant container from an unfolded position to a folded position.

It is a great advantage that the plant container can transform from an unfolded position, minimizing unutilized space during transportation and storage, to a folded position configured for stacking empty folded containers, for receiving a plant growth medium and withstanding irrigating, and for being planted in soil to subsequently degrade.

In the folded position, the containers may be stacked on top of one another to minimize unutilized space during transport of folded containers and during storage before receiving a plant growth medium.

Folding the container only takes a couple of seconds and the method of folding may be executed by a robot and/or a worker.

The act of engaging the locking means is particularly, but not exclusively, advantageous for providing a method of securing the sets of opposing folded side flanges relative to one another by securing the top flanges in the first side wall and thereby enclosing the sets of folded side flanges.

It should be understood that inserting the one or more protrusions into complementary shaped apertures ensures that the folded first and second side wall remain in place and that the container does not unfolds itself unintentionally.

In one embodiment of the method, each side flange may comprise a partial protrusion configured for forming a protrusion with the opposing side flange when the foldable container is in the folded position.

The embodiment is particularly, but not exclusively, advantageous for providing a method of securing the sets of opposing folded side flanges by using a single aperture for locking two partial protrusions. Using a single aperture limits the number of apertures while securing two opposing first side walls in a position relative to one another and relative to the second side wall enclosing said first side walls.

It should be understood that locking the two partial protrusions increase the stability of the folded container by preventing the two opposing first side walls from accidently unfolding and by restricting the amount of apertures required for folding and interlocking the side walls of the container.

In one embodiment, the method may further comprise one or more of the following acts of the plant container in the folded position:
- receiving a plant growth medium;
- irrigating the foldable plant container comprising a plant growth medium; and
- planting the foldable plant container comprising a plant growth medium in soil.

The embodiment is particularly, but not exclusively, advantageous for providing a folded container configured for use in nursing and planting a plant growth medium directly in soil.

The folded container may receive a plant growth medium from an automated machine such as a robot, or manually by a worker. After packing the plant growth medium, the folded container may be transported to an ebb and flow table configured for periodically irrigating one or more folded containers arranged on said table. The table is flooded periodically such as every second day, one time a day, two times a day, or three times a day.

The table is flooded between 10-40 minutes during each cycle, preferably between 20-30 minutes.

The nursing stage may be 4-8 months, preferably 6 months. During the nursing stage, the folded container comprising a plant growth medium may be located at a commercial plant nursery, a plant wholesaler, or privately by the end consumer. After the nursing stage, the plant growth medium is ready to be planted directly in soil by the end consumer. After further 1-18 months, the biodegradable container is fully absorbed in the soil.

The first and second aspect of the present invention may each be combined with any of the other aspects. These and other aspects of the invention will be apparent from and elucidated with reference to the embodiments described hereinafter.

Embodiments from the system/product should be seen as applicable to the method, and embodiments from the method should be seen as applicable for the product/system.

### Description of the Drawing

Various examples are described hereinafter with reference to the figures. Like reference numerals refer to like elements throughout. Like elements will, thus, not be described in detail with respect to the description of each figure. It should also be noted that the figures are only intended to facilitate the description of the examples. They are not intended as an exhaustive description of the claimed invention or as a limitation on the scope of the claimed invention. In addition, an illustrated example need not have all the aspects or advantages shown. An aspect or an advantage described in conjunction with a particular example is not necessarily limited to that example and can be practiced in any other examples even if not so illustrated, or if not so explicitly described.

Exemplary embodiments of the invention are described in the figures, whereon:
- Fig. 1: illustrates the foldable plant container in the unfolded position;
- Fig. 2: illustrates the foldable plant container in the folded position;
- Fig. 3: illustrates the foldable plant container in the unfolded position with cut outs, apertures, cuts, and creases;
- Fig. 4: illustrates the container partially folded;
- Fig. 5: illustrates a side view and a bottom view of neighbouring folded containers;
- Fig. 6: illustrates the method of folding the container; and
- Fig. 7: illustrates further acts of method of the container in the folded position.

### Detailed Description of the Invention

Exemplary examples will now be described more fully hereinafter with reference to the accompanying drawings. In this regard, the present examples may have different forms and should not be construed as being limited to the descriptions set forth herein. Accordingly, the examples are merely described below, by referring to the figures, to explain aspects.

Throughout the specification, when an element is referred to as being "connected" to another element, the element is "directly connected" to the other element, "electrically connected", "fluidic connected" or "communicatively connected" to the other element with one or more intervening elements interposed there between.

The terminology used herein is for the purpose of describing particular examples only and is not intended to be limiting. As used herein, the terms "comprises" "comprising" "includes" and/or "including" when used in this specification specify the presence of stated features, integers, steps, operations, elements, and/or components, but do not preclude the presence or addition of one or more other features, integers, steps, operations, elements, components, and/or groups thereof.

Unless otherwise defined, all terms used herein (including technical and scientific terms) have the same meaning as commonly understood by those skilled in the art to which this invention pertains. It will be further understood that terms, such as those defined in commonly used dictionaries, should be interpreted as having a meaning that is consistent with their meaning in the context of the relevant art and will not be interpreted in an idealized or overly formal sense unless expressly so defined in the present specification.

| No | Item |
|---|---|
| 1 | foldable plant container |
| 10 | unfolded position |
| 20 | folded position |
| 30 | plant growth medium |
| 40 | side wall |
| 40a | first side wall |
| 40b | second side wall |
| 41 | side folding crease |
| 41' | parallel side folding crease |
| 42 | side flange (42a1,42a2,42b1,42b2) |
| 43 | top flange |
| 44 | indentation |
| 50 | bottom |
| 51 | bottom folding crease |
| 52 | draining means |
| 60 | protrusion |
| 60a | partial protrusion |
| 61 | aperture |
| 100 | method |
| 200 | providing |
| 300 | folding first side walls |
| 400 | folding side flanges |
| 500 | folding second side walls |
| 600 | folding top flange |
| 700 | engaging |
| 800 | inserting side flange protrusions |
| 900 | inserting top flange protrusions |
| 1000 | receiving |
| 2000 | irrigating |
| 3000 | planting |

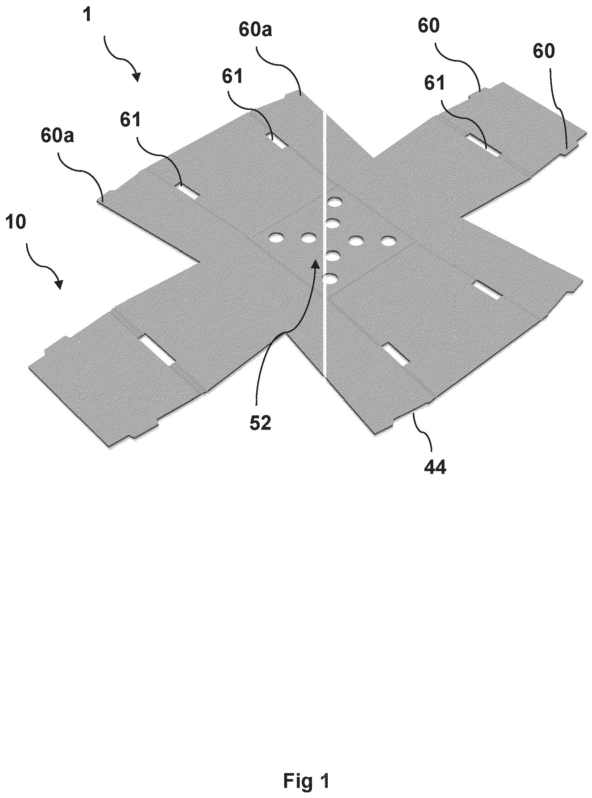

Fig. 1-5 illustrate a foldable plant container 1, preferably a plant pot, constructed in a water-permeable biodegradable material.

The foldable container 1 comprises a plurality of side walls 40a, 40b and a bottom 50.

The side walls comprises two first side walls 40a, each comprising two side flanges 42, and two second side walls 40b, each comprising a top flange 43.

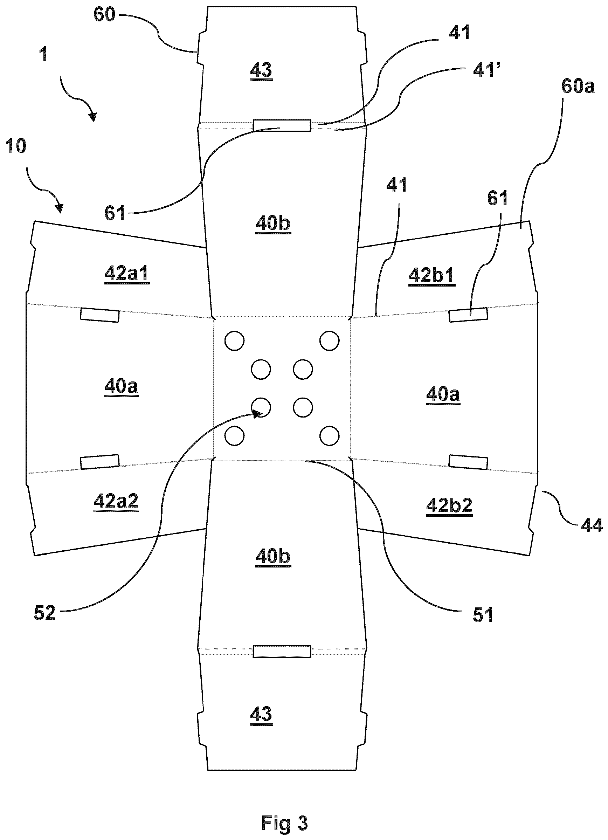

Each of the side walls 40 comprise at least one side folding crease 41, 41'. The side folding creases are positioned between a side wall 40a and a side flange 42 on the first side wall 40a and between a side wall 40b and a top flange 43 on the second side wall 40b. As especially visible in fig. 3, the side folding crease on each second side walls comprises two substantially parallel side folding creases 41, 41'.

The side flanges 42 further comprise indentations for ensuring that the top flanges 43 can easily be folded over side flanges 42a,1 42b1 and side flanges 42a2, 42b2.

The bottom 50 is defined by a plurality of bottom folding creases 51 positioned between a side wall 40 and the bottom 50.

The surface area of the bottom 50 is smaller than the area of an upper opening defined by the side walls when the foldable container 1 is in the folded position 20. This further provides a conical shape of the folded container 1 which enables several containers to be stacked on top of each other.

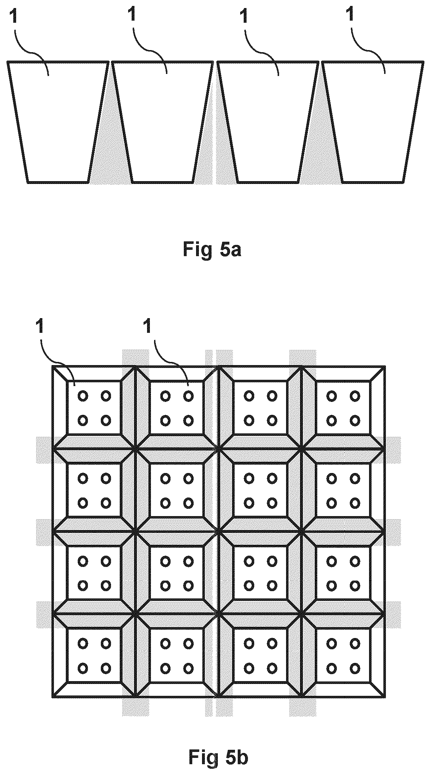

The conical shape of the container 1 in the folded position 20 further enables airflow in between neighboring containers when arranged next to one another. The grey marking in the side view in fig. 5a and in the bottom view in fig. 5b illustrate said airflow in between folded containers.

The bottom 50 further comprises draining means 52 such as cut outs as illustrated in figure 1 and 3. The draining means may preferably be cut outs.

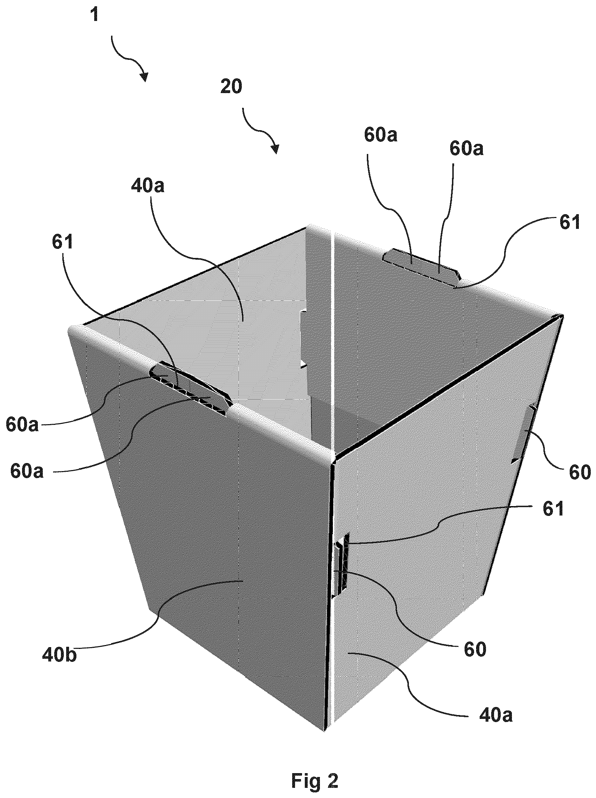

The foldable container 1 is a monolith that can take at least two positions; an unfolded position 10, as seen in fig. 1, and an folded position (20), as seen in fig. 2.

The unfolded position 10 is suitable for transportation and/or storage. The unfolded container 1 is configured in a single layer, preferably being at least substantially a plane layer.

The folded position 20 defines a container comprising a planting space, preferably for receiving a plant growth medium 30.

In the folded position 20, at least one side folding crease 41 is folded, preferably six or eight side folding creases 41,41' are folded.

In the folded position 20, at least one bottom folding crease 51 is folded, preferably four bottom folding creases 51 are folded.

In the folded position 20, a second side wall 40b and the top flange 43 of said second side wall 40b enclose at least partially two side flanges 42, wherein said two side flanges 42 are from two opposing first side walls 40a.

The foldable container 1 comprises locking means 60,61. The locking means 60, 61 comprise one or more protrusions 60 arranged on each top flange 43 and each side flange 42, and complementary shaped apertures 61 configured for receiving said protrusions 60.

As best seen on figures 2, 4, and 5, the side flange 42 of the foldable container 1 comprises partial protrusions 60a configured for forming a protrusion 60 with the opposing side flange 42 when the foldable container is in the folded position 20.

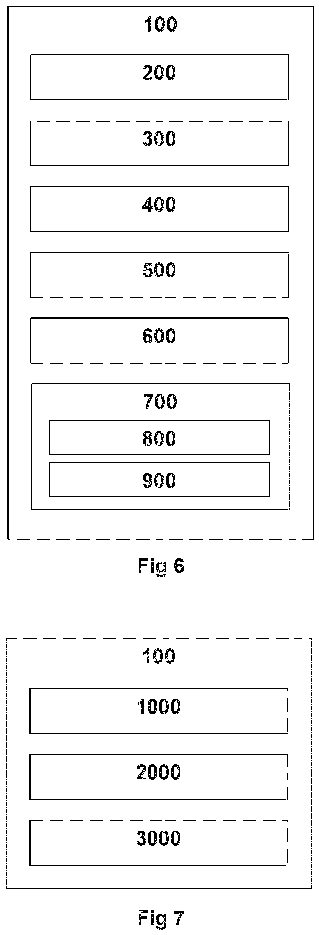

Fig. 6 describes a method 100 for folding a plant pot 1, preferably a plant container, from an unfolded position 10 to a folded position 20.

The method comprises an act of providing 200 a foldable plant container 1 in an unfolded position 10.

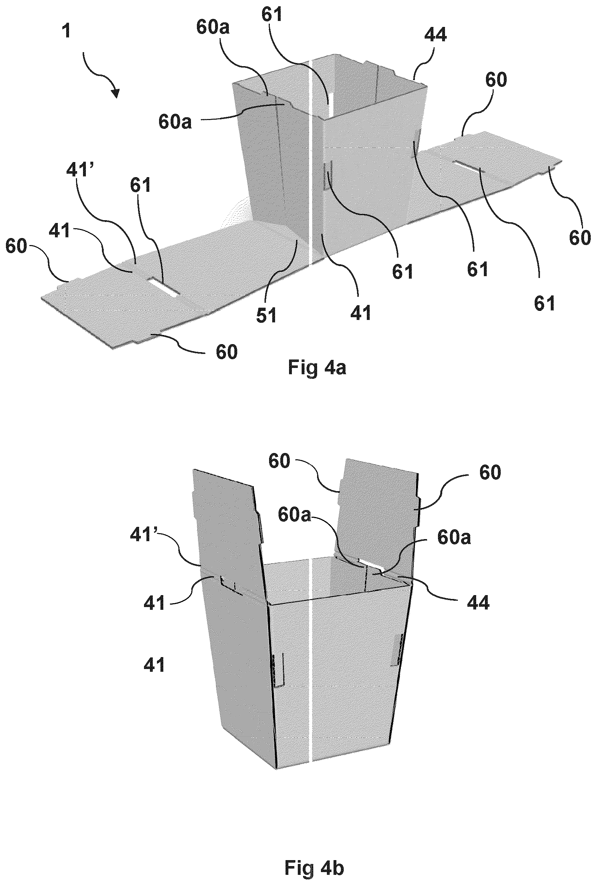

The method 100 comprises an act of folding 300 two opposing first side walls 40a at the bottom creases 51 from a substantially horizontal position to a substantially upright position. The substantially upright position is best illustrated in fig. 4a.

The method 100 comprises an act of folding 400 the side flanges 42a1,42b1 at the side crease 41 towards the opposing side flange 42b1,42a1. The method further comprises an act of folding 400 the side flanges 42a2,42b2 at the side creases 41 towards the opposing side flanges 42b2,42a2.

The method 100 comprises an act of folding 500 two opposing second wall sides 40b at the bottom creases 51 from a substantially horizontal position to a substantially upright position. The substantially upright position is best illustrated in fig. 4b.

The method 100 comprises an act of folding 600 the top flange 43, at the top side folding creases 41, over the side flanges 42a1,42b1. The method 100 further comprises an act of folding 600 the top flange 43, at the top side folding crease 41, over the side flanges 42a2,42b2.

The method 100 comprises an act of engaging 700 the locking means 60,61. The act of engaging 700 further comprises the act of inserting 800 one or more protrusions 60, arranged on each side flange 42a1,42a2,42b1,42b2, into complementary shaped apertures 61 positioned in the second side wall 40b. The act of engaging further comprises inserting 900 one or more protrusions 60, arranged on each top flange 43, into complementary shaped apertures 61 positioned in the first side walls 40a.

Fig. 7 describes the method 100 further comprising an act of the folded plant container 1 in the folded position 20 receiving 1000 a plant growth medium 30, irrigating 2000 the foldable plant container 1 comprising a plant growth medium 30, and planting 3000 the foldable plant container 1 comprising a plant growth medium 30 in soil.

## Claims

1. A foldable plant container (1), preferably a plant pot, constructed in a water-permeable biodegradable material, wherein the foldable container (1) comprises:
- a plurality of side walls (40a, 40b):
- at least two first side walls (40a), each comprising two side flanges (42);
- at least two second side walls (40b), each comprising a top flange (43), wherein said side walls (40) comprise at least one side folding crease (41), said side folding creases being positioned:
- between a side wall (40a) and a side flange (42) on the first side wall (40a); and/or
- between a side wall (40b) and a top flange (43) on the second side wall (40b),
- a bottom (50) defined by a plurality of bottom folding creases (51):
wherein said bottom folding creases (51) are positioned:
- between a side wall (40) and the bottom (50);
wherein the foldable container (1) is a monolith that can take at least two positions:
- an unfolded position (10) for transportation and/or storage, wherein the foldable container (1) is configured in a single layer, preferably being at least substantially a plane layer; and
- a folded position (20) defining a container, preferably for receiving a plant growth medium (30), wherein in the folded position (20):
- at least one side folding crease (41) is folded, preferably six side folding creases (41) are folded;
- at least one bottom folding crease (51) is folded, preferably four bottom folding creases (51) are folded; and
- a second side wall (40b) and the top flange (43) of said second side wall (40b) enclose at least partially two side flanges (42), wherein said two side flanges (42) are from two opposing first side walls (40a),
wherein said foldable container (1) comprises locking means (60,61), said locking means (60, 61) comprises:
- one or more protrusions (60) arranged on each top flange (43) and each side flange (42); and
- complementary shaped apertures (61) configured for receiving said protrusions (60).

2. The foldable plant container (1) according to claim 1, wherein each side flange (42) comprises a partial protrusion (60a) configured for forming a protrusion (60) with the opposing side flange (42) when the foldable container is in the folded position (20).

3. The foldable plant container (1) according to any of the preceding claims, said side flange (42) comprises an indentation (44).

4. The foldable plant container (1) according to any of the preceding claims, wherein the surface area of the bottom (50) is smaller than the area of an upper opening defined by the side walls (40) when the foldable container (1) is in the folded position (20).

5. The foldable plant container (1) according to any of the preceding claims, wherein the bottom (50) comprises draining means (52), said draining means (52) preferably being cut outs.

6. The foldable plant container (1) according to any of the preceding claims, said second side walls (40b) comprise two substantially parallel side folding creases (41, 41').

7. The foldable plant container (1) according to any of claims 1-5, wherein the second side walls (40b) comprise a wide side folding crease (41).

8. The foldable plant container (1) according to any of the preceding claims, wherein the biodegradable material is a corrugated cardboard.

9. The foldable plant container (1) according to any of the preceding claims, wherein the biodegradable material is a corrugated cardboard comprising between 80-99%, preferably 85-99%, more preferably 90-99%, even more preferably 95-99%, most preferably 89-99% recycled corrugated board, and/or paper, and/or cardboard.

10. The foldable plant container (1) according to any of the preceding claims, wherein the side walls (40) and bottom (50) when in the folded position (20) can withstand an applied pressure in a direction:
- downwards towards the bottom (50); and
- outwards towards the side walls (40);
wherein the applied pressure is between 0.1-1 bar, 0.1-0.3 bar, 0.2-0.4 bar, 0.2-0.5 bar, 0.3-0.9 bar, or 0.4-1 bar.

11. A method (100) for folding a plant container according to any of the preceding claims, from an unfolded position (10) to a folded position (20), wherein the method comprises the acts of:
- providing (200) a foldable plant container (1) in an unfolded position (10);
- folding (300) two opposing first side walls (40a) at the bottom creases (51) from a substantially horizontal position to a substantially upright position;
- folding (400) the side flanges (42a1,42b1) at the side crease (41) towards the opposing side flange (42b1,42a1);
- folding (400) the side flanges (42a2,42b2) at the side creases (41) towards the opposing side flanges (42b2,42a2);
- folding (500) two opposing second wall sides (40b) at the bottom creases (51) from a substantially horizontal position to a substantially upright position;
- folding (600) the top flange (43), at the top side folding creases (41), over the side flanges (42a1,42b1) for enclosing at least partially said side flanges,
- folding (600) the top flange (43), at the top side folding crease (41), over the side flanges (42a2,42b2), for enclosing at least partially said side flanges; and
- engaging (700) the locking means (60,61),
wherein the act of engaging (700) further comprise acts of:
- inserting (800) one or more protrusions (60), arranged on each side flange (42a1,42a2,42b1,42b2), into complementary shaped apertures (61) positioned in the second side wall (40b); and
- inserting (900) one or more protrusions (60), arranged on each top flange (43), into complementary shaped apertures (61) positioned in the first side walls (40a).

12. The method (100) according to claim 11, wherein each side flange (42) comprises a partial protrusion (60a) configured for forming a protrusion (60) with the opposing side flange (42) when the foldable container is in the folded position (20).

13. The method (100) according to claim 11 or 12, wherein the method further comprising one or more of the following acts of the plant container (1) in the folded position (20):
- receiving (1000) a plant growth medium (30);
- irrigating (2000) the foldable plant container (1) comprising a plant growth medium (30); and
- planting (3000) the foldable plant container (1) comprising a plant growth medium (30) in soil.

## Patentansprüche

1. Faltbarer Pflanzenbehälter (1), vorzugsweise ein Blumentopf, hergestellt aus einem wasserdurchlässigen biologisch abbaubaren Material, wobei der faltbare Behälter (1) umfasst:
- eine Vielzahl von Seitenwänden (40a, 40b):
- mindestens zwei erste Seitenwände (40a), die jeweils zwei Seitenlaschen (42) umfassen;
- mindestens zwei zweite Seitenwände (40b), die jeweils eine Oberlasche (43) umfassen,
wobei die Seitenwände (40) mindestens eine Seitenfalzlinie (41) umfassen, wobei die Seitenfalzlinien positioniert sind:
- zwischen einer Seitenwand (40a) und einer Seitenlasche (42) an der ersten Seitenwand (40a); und/oder
- zwischen einer Seitenwand (40b) und einer Oberlasche (43) an der zweiten Seitenwand (40b),
- einen Boden (50), der durch eine Vielzahl von Bodenfalzlinien (51) definiert ist:
wobei die Bodenfalzlinien (51) positioniert sind:
- zwischen einer Seitenwand (40) und dem Boden (50);
wobei der faltbare Behälter (1) ein Monolith ist, der mindestens zwei Stellungen einnehmen kann:
- eine entfaltete Stellung (10) für den Transport und/oder die Lagerung, wobei der faltbare Behälter (1) in einer einzigen Schicht ausgelegt ist, vorzugsweise zumindest im Wesentlichen eine ebene Schicht bildend; und
- eine gefaltete Stellung (20), die einen Behälter definiert, vorzugsweise zur Aufnahme eines Pflanzenwachstumssubstrats (30), wobei in der gefalteten Stellung (20):
- mindestens eine Seitenfalzlinie (41) gefaltet ist, vorzugsweise sechs Seitenfalzlinien (41) gefaltet sind;
- mindestens eine Bodenfalzlinie (51) gefaltet ist, vorzugsweise vier Bodenfalzlinien (51) gefaltet sind; und
- eine zweite Seitenwand (40b) und die Oberlasche (43) der zweiten Seitenwand (40b) zwei Seitenlaschen (42) zumindest teilweise umschließen, wobei die zwei Seitenlaschen (42) von zwei gegenüberliegenden ersten Seitenwänden (40a) stammen,
wobei der faltbare Behälter (1) Verriegelungsmittel (60, 61) umfasst, wobei die Verriegelungsmittel (60, 61) umfassen:
- einen oder mehrere Vorsprünge (60), die auf jeder Oberlasche (43) und jeder Seitenlasche (42) angeordnet sind; und
- komplementär geformte Öffnungen (61), die zum Aufnehmen der Vorsprünge (60) ausgelegt sind.

2. Faltbarer Pflanzenbehälter (1) nach Anspruch 1, wobei jede Seitenlasche (42) einen Teilvorsprung (60a) umfasst, der zum Bilden eines Vorsprungs (60) mit der gegenüberliegenden Seitenlasche (42) ausgelegt ist, wenn der faltbare Behälter sich in der gefalteten Stellung (20) befindet.

3. Faltbarer Pflanzenbehälter (1) nach einem der vorhergehenden Ansprüche, wobei die Seitenlasche (42) eine Einbuchtung (44) umfasst.

4. Faltbarer Pflanzenbehälter (1) nach einem der vorhergehenden Ansprüche, wobei die Oberfläche des Bodens (50) kleiner ist als die Fläche einer oberen Öffnung, die durch die Seitenwände (40) definiert ist, wenn der faltbare Behälter (1) sich in der gefalteten Stellung (20) befindet.

5. Faltbarer Pflanzenbehälter (1) nach einem der vorhergehenden Ansprüche, wobei der Boden (50) Entwässerungsmittel (52) umfasst, wobei die Entwässerungsmittel (52) vorzugsweise Ausschnitte sind.

6. Faltbarer Pflanzenbehälter (1) nach einem der vorhergehenden Ansprüche, wobei die zweiten Seitenwände (40b) zwei im Wesentlichen parallele Seitenfalzlinien (41, 41') umfassen.

7. Faltbarer Pflanzenbehälter (1) nach einem der Ansprüche 1-5, wobei die zweiten Seitenwände (40b) eine breite Seitenfalzlinie (41) umfassen.

8. Faltbarer Pflanzenbehälter (1) nach einem der vorhergehenden Ansprüche, wobei das biologisch abbaubare Material eine Wellpappe ist.

9. Faltbarer Pflanzenbehälter (1) nach einem der vorhergehenden Ansprüche, wobei das biologisch abbaubare Material eine Wellpappe ist, die zwischen 80-99 %, vorzugsweise 85-99 %, bevorzugter 90-99 %, noch bevorzugter 95-99 %, am bevorzugtesten 89-99 % Recyclingwellpappe und/oder Papier und/oder Karton umfasst.

10. Faltbarer Pflanzenbehälter (1) nach einem der vorhergehenden Ansprüche, wobei die Seitenwände (40) und der Boden (50) in der gefalteten Stellung (20) einem aufgebrachten Druck in einer Richtung standhalten können:
- nach unten in Richtung des Bodens (50); und
- nach außen in Richtung der Seitenwände (40);
wobei der aufgebrachte Druck zwischen 0,1-1 bar, 0,1-0,3 bar, 0,2-0,4 bar, 0,2-0,5 bar, 0,3-0,9 bar oder 0,4-1 bar liegt.

11. Verfahren (100) zum Falten eines Pflanzenbehälters nach einem der vorhergehenden Ansprüche, von einer entfalteten Stellung (10) in eine gefaltete Stellung (20), wobei das Verfahren die folgenden Schritte umfasst:
- Bereitstellen (200) eines faltbaren Pflanzenbehälters (1) in einer entfalteten Stellung (10);
- Falten (300) von zwei gegenüberliegenden ersten Seitenwänden (40a) an den Bodenfalzlinien (51) von einer im Wesentlichen horizontalen Stellung in eine im Wesentlichen aufrechte Stellung;
- Falten (400) der Seitenlaschen (42a1, 42b1) an der Seitenfalzlinie (41) in Richtung der gegenüberliegenden Seitenlasche (42b1, 42a1);
- Falten (400) der Seitenlaschen (42a2, 42b2) an den Seitenfalzlinien (41) in Richtung der gegenüberliegenden Seitenlaschen (42b2, 42a2);
- Falten (500) zweier gegenüberliegender zweiter Wandseiten (40b) an den Bodenfalzlinien (51) von einer im Wesentlichen horizontalen Stellung in eine im Wesentlichen aufrechte Stellung;
- Falten (600) der Oberlasche (43) an den oberen Seitenfalzlinien (41) über die Seitenlaschen (42a1,42b1) zum zumindest teilweisen Einschließen der Seitenlaschen,
- Falten (600) der Oberlasche (43) an der oberen Seitenfalzlinie (41) über die Seitenlaschen (42a2,42b2) zum zumindest teilweisen Einschließen der Seitenlaschen; und
- Einrasten (700) der Verriegelungsmittel (60,61),
wobei der Akt des Einrastens (700) ferner Akte umfasst von:
- Einführen (800) eines oder mehrerer Vorsprünge (60), angeordnet auf jeder Seitenlasche (42a1,42a2,42b1,42b2), in komplementär geformte Öffnungen (61), die in der zweiten Seitenwand (40b) positioniert sind; und
- Einführen (900) eines oder mehrerer Vorsprünge (60), angeordnet auf jeder Oberlasche (43), in komplementär geformte Öffnungen (61), die in den ersten Seitenwänden (40a) positioniert sind.

12. Verfahren (100) nach Anspruch 11, wobei jede Seitenlasche (42) einen Teilvorsprung (60a) umfasst, der dazu ausgelegt ist, mit der gegenüberliegenden Seitenlasche (42) einen Vorsprung (60) zu bilden, wenn der faltbare Behälter in der gefalteten Stellung (20) ist.

13. Verfahren (100) nach Anspruch 11 oder 12, wobei das Verfahren ferner einen oder mehrere der folgenden Akte des Pflanzenbehälters (1) in der gefalteten Stellung (20) umfassend:
- Empfangen (1000) eines Pflanzenwachstumssubstrats (30);
- Bewässern (2000) des faltbaren Pflanzenbehälters (1), umfassend ein Pflanzenwachstumssubstrat (30); und
- Einpflanzen (3000) des faltbaren Pflanzenbehälters (1), umfassend ein Pflanzenwachstumssubstrat (30), in Erde.

## Revendications

1. Récipient pour plante pliable (1), de préférence un pot pour plante, réalisé en un matériau biodégradable perméable à l'eau, dans lequel le récipient pliable (1) comprend :
- une pluralité de parois latérales (40a, 40b) :
- au moins deux premières parois latérales (40a), comprenant chacune deux ailes latérales (42) ;
- au moins deux secondes parois latérales (40b), comprenant chacune une aile supérieure (43),
dans lequel lesdites parois latérales (40) comprennent l'au moins une ligne de pliage latérale (41), lesdites lignes de pliage latérales étant positionnées :
- entre une paroi latérale (40a) et une aile latérale (42) sur la première paroi latérale (40a) ; et/ou
- entre une paroi latérale (40b) et une aile supérieure (43) sur la seconde paroi latérale (40b),
- un fond (50) défini par une pluralité de lignes de pliage de fond (51) :
dans lequel lesdites lignes de pliage de fond (51) sont positionnées :
- entre une paroi latérale (40) et le fond (50) ;
dans lequel le récipient pliable (1) est un monolithe pouvant prendre au moins deux positions :
- une position dépliée (10) pour le transport et/ou le stockage, dans laquelle le récipient pliable (1) est configuré en une couche unique, de préférence étant au moins sensiblement une couche plane ; et
- une position pliée (20) définissant un récipient, de préférence destiné à recevoir un milieu de croissance de plante (30), dans laquelle, dans la position pliée (20) :
- au moins une ligne de pliage latérale (41) est pliée, de préférence six lignes de pliage latérales (41) sont pliées ;
- au moins une ligne de pliage de fond (51) est pliée, de préférence quatre lignes de pliage de fond (51) sont pliées ; et
- une seconde paroi latérale (40b) et l'aile supérieure (43) de ladite seconde paroi latérale (40b) renferment au moins partiellement deux ailes latérales (42), dans lequel lesdites deux ailes latérales (42) proviennent de deux premières parois latérales opposées (40a),
dans lequel ledit récipient pliable (1) comprend des moyens de verrouillage (60,61), lesdits moyens de verrouillage (60, 61) comprenant :
- une ou plusieurs saillies (60) disposées sur chaque aile supérieure (43) et chaque aile latérale (42) ; et
- des ouvertures de forme complémentaire configurées pour recevoir lesdites saillies (60).

2. Récipient pour plante pliable (1) selon la revendication 1, dans lequel chaque aile latérale (42) comprend une saillie partielle (60a) configurée pour former une saillie (60) avec l'aile latérale opposée (42) lorsque le récipient pliable est dans la position pliée (20).

3. Récipient pour plante pliable (1) selon l'une quelconque des revendications précédentes, ladite aile latérale (42) comprend un évidement (44).

4. Récipient pour plante pliable (1) selon l'une quelconque des revendications précédentes, dans lequel la surface du fond (50) est inférieure à la surface d'une ouverture supérieure définie par les parois latérales (40) lorsque le récipient pliable (1) est dans la position pliée (20).

5. Récipient pour plante pliable (1) selon l'une quelconque des revendications précédentes, dans lequel le fond (50) comprend des moyens de drainage (52), lesdits moyens de drainage (52) étant de préférence des découpes.

6. Récipient pour plante pliable (1) selon l'une quelconque des revendications précédentes, lesdites secondes parois latérales (40b) comprennent deux lignes de pliage latérales sensiblement parallèles (41, 41').

7. Récipient pour plante pliable (1) selon l'une quelconque des revendications 1-5, dans lequel les secondes parois latérales (40b) comprennent une ligne de pliage latérale large (41).

8. Récipient pour plante pliable (1) selon l'une quelconque des revendications précédentes, dans lequel le matériau biodégradable est un carton ondulé.

9. Récipient pour plante pliable (1) selon l'une quelconque des revendications précédentes, dans lequel le matériau biodégradable est un carton ondulé comprenant entre 80-99%, de préférence 85-99%, plus préférablement 90-99%, encore plus préférablement 95-99%, le plus préférablement 89-99% de carton ondulé recyclé, et/ou de papier, et/ou de carton.

10. Récipient pour plante pliable (1) selon l'une quelconque des revendications précédentes, dans lequel les parois latérales (40) et le fond (50), lorsqu'ils sont dans la position pliée (20), peuvent résister à une pression appliquée dans une direction :
- vers le bas en direction du fond (50) ; et
- vers l'extérieur en direction des parois latérales (40) ;
dans lequel la pression appliquée est comprise dans une plage de 0,1-1 bar, 0,1-0,3 bar, 0,2-0,4 bar, 0,2-0,5 bar, 0,3-0,9 bar, ou 0,4-1 bar.

11. Procédé (100) de pliage d'un récipient pour plante selon l'une quelconque des revendications précédentes, d'une position dépliée (10) à une position pliée (20), dans lequel le procédé comprend les actes consistant à :
- fournir (200) un récipient pour plante pliable (1) dans une position dépliée (10) ;
- plier (300) deux premières parois latérales opposées (40a) au niveau des lignes de pliage de fond (51) d'une position sensiblement horizontale à une position sensiblement verticale ;
- plier (400) les ailes latérales (42a1,42b1) au niveau de la ligne de pliage latérale (41) vers l'aile latérale opposée (42b1,42a1) ;
- plier (400) les ailes latérales (42a2,42b2) au niveau des lignes de pliage latérales (41) vers les ailes latérales opposées (42b2,42a2) ;
- plier (500) deux seconds côtés de paroi opposés (40b) au niveau des lignes de pliage de fond (51) d'une position sensiblement horizontale à une position sensiblement verticale ;
- plier (600) l'aile supérieure (43), au niveau des lignes de pliage latérales supérieures (41), sur les ailes latérales (42a1,42b1) afin de renfermer au moins partiellement lesdites ailes latérales,
- plier (600) l'aile supérieure (43), au niveau de la ligne de pliage latérale supérieure (41), sur les ailes latérales (42a2,42b2), afin de renfermer au moins partiellement lesdites ailes latérales ; et
- engager (700) les moyens de verrouillage (60,61),
dans lequel l'acte d'engager (700) comprend en outre des actes consistant à :
- insérer (800) une ou plusieurs saillies (60), disposées sur chaque aile latérale (42a1,42a2,42b1,42b2), dans des ouvertures de forme complémentaire (61) positionnées dans la seconde paroi latérale (40b) ; et
- insérer (900) une ou plusieurs saillies (60), disposées sur chaque aile supérieure (43), dans des ouvertures de forme complémentaire (61) positionnées dans les premières parois latérales (40a).

12. Procédé (100) selon la revendication 11, dans lequel chaque aile latérale (42) comprend une saillie partielle (60a) configurée pour former une saillie (60) avec l'aile latérale opposée (42) lorsque le récipient pliable est dans la position pliée (20).

13. Procédé (100) selon la revendication 11 ou 12, dans lequel le procédé comprend en outre un ou plusieurs des actes suivants du récipient pour plante (1) dans la position pliée (20) :
- recevoir (1000) un milieu de croissance de plante (30) ;
- irriguer (2000) le récipient pour plante pliable (1) comprenant un milieu de croissance de plante (30) ; et
- planter (3000) le récipient pour plante pliable (1) comprenant un milieu de croissance de plante (30) dans un sol.
